# EUROPEAN PATENT SPECIFICATION

(11) **EP 0 897 615 B1**
(45) Date of publication and mention of the grant of the patent: **21.01.2004**
(21) Application number: 96916541.4
(22) Date of filing: 07.05.1996
(51) Int. Cl.: H03K 17/94, H03M 11/00, H01H 13/70, G06F 3/02

(54) **EXPANDABLE KEYBOARD WITH INTERLEAVING SECTIONS**
AUSZIEHBARE TASTATUR MIT VERSCHACHTELTEN TEILEN
CLAVIER EXTENSIBLE AVEC DES SECTIONS IMBRIQUEES

(43) Date of publication of application: 24.02.1999
(73) Proprietor: Roysden, Brunn W., Jr., Phoenix, Arizona 85018 (US)
(72) Inventor: Roysden, Brunn W., Jr., Phoenix, Arizona 85018 (US)
(74) Representative: Schmitz, Jean-Marie
(86) International application number: PCT/US1996/007397
(87) International publication number: WO 1997/042708

(56) References cited:
- EP-A- 0 640 489
- US-A- 3 940 758
- US-A- 5 187 644
- US-A- 5 519 569
- ANONYMOUS: "Briefcase-Portable Textwriter With 100-Key Full-Size Keyboard" IBM TECHNICAL DISCLOSURE BULLETIN, vol. 27, no. 4A, September 1984 (1984-09), pages 2002-2004, XP002127305 New York, US
- MALTZ M S: "FOLDING KEYBOARD" XEROX DISCLOSURE JOURNAL,US,XEROX CORPORATION. STAMFORD, CONN, vol. 14, no. 3, May 1989 (1989-05) - June 1989 (1989-06), page 139-140 XP000027474

## Description

### Technical Field

My invention relates to keyboards, and particularly to keyboards for typewriters, computers, calculators, telephones, and other types of equipment defined as "computers", below, which utilize a keyboard for the input of data or commands, which keyboards can be compacted for storage and expanded for use, and for the combination of said computers and said keyboards.

For many applications, it is desirable to have a computer with a keyboard which can be reduced in size and volume for transport or storage, but which can be expanded for use.

### Background Art

A computer is a device which includes
a central processing unit (CPU), consisting of control and arithmetic/logic sections that processes information (data); a main memory unit... in which the information is held while being processed; and devices that respectively feed information into the CPU (input) and provide the user with the results of the computation (output).
*The Tormont Webster's Illustrated Encyclopedic Dictionary,* 1990 edition published by Tormont Publications Inc., 338 St. Antoine St. East, Montreal, Canada H2Y 1A3, page 363.

A device need not be popularly known as a "computer" to come within the definition outlined above, and a "computer" may have more components than those listed above. Thus, a cellular phone typically has multiple input and output means, including, for instance, a keyboard, a means of converting between sound and electromagnetic signals, and, frequently, an LCD (liquid crystal display), together with one or more data processors, at least one of which frequently is of the type known as a "digital signal processor" or DSP.

"Personal Digital Assistants", or PDAs, are a form of a computer, although many current PDAs lack integrated keyboards, largely because, until this invention, nobody knew how to build a compact, economical, reliable keyboard for PDAs on which the adult human hand could touch type.

In conclusion, those familiar with the technology will understand what is meant by "computer" in this Application, notwithstanding that the popular nomenclature of a device may be phone, calculator, (electronic) typewriter, or something else. It is an object of this invention to describe a keyboard that will work with a variety of computers, or be a component of a wide variety of computers, both those which are currently known and those which are developed in the future.

The keyboard is primarily a data input means, although many keyboards also contain data output means.

It would be perfectly possible to make a computer without a keyboard, utilizing, e.g. pens, stylus, or voice commands to input information and instructions to the processor. However, the invention described here relates only to computers which have or can have keyboards associated with them.

A keyboard contains a plurality of keys and the means of detecting which key or combination of keys have been pressed or activated, as is well known to those familiar with the art. The detection is transmitted, directly or indirectly, either immediately or after a pause, to a data processor (and indeed, may be transmitted to many data processors, directly or indirectly, either simultaneously or sequentially, with or without intermediate processing.) There are a variety of detection means available, as is well known to those familiar with the art. It is an object of this invention to describe a keyboard which will work with a wide variety of key activation and detection means, both those now known, and those which may be developed in the future. Examples of key activation and detection means using electronic circuits are described by Louis, U.S. Patent Number 5,212,473 (1993), and Kishimoto, U.S. Patent 4,395,704 (1983); See also, e.g. Margolin, U.S. Patent Number 3,940,758 (1976), which claims an ''electronic circuit" for the keyboard, but does not illustrate said circuit, presumably because such circuits are well known even in 1976.

Margolin, U.S. Patent Number 3,940,758 (1976) describes a keyboard which is split into two or more sections, the sections then being folded or stacked on themselves for storage or transportation. While the Margolin keyboard will reduce the footprint of the keyboard during storage or transport, it will not reduce the volume of the keyboard. In other words, the stacked height of the keyboard as described by Margolin is essentially twice as thick as each section in a two-section Margolin class of keyboard, etc.

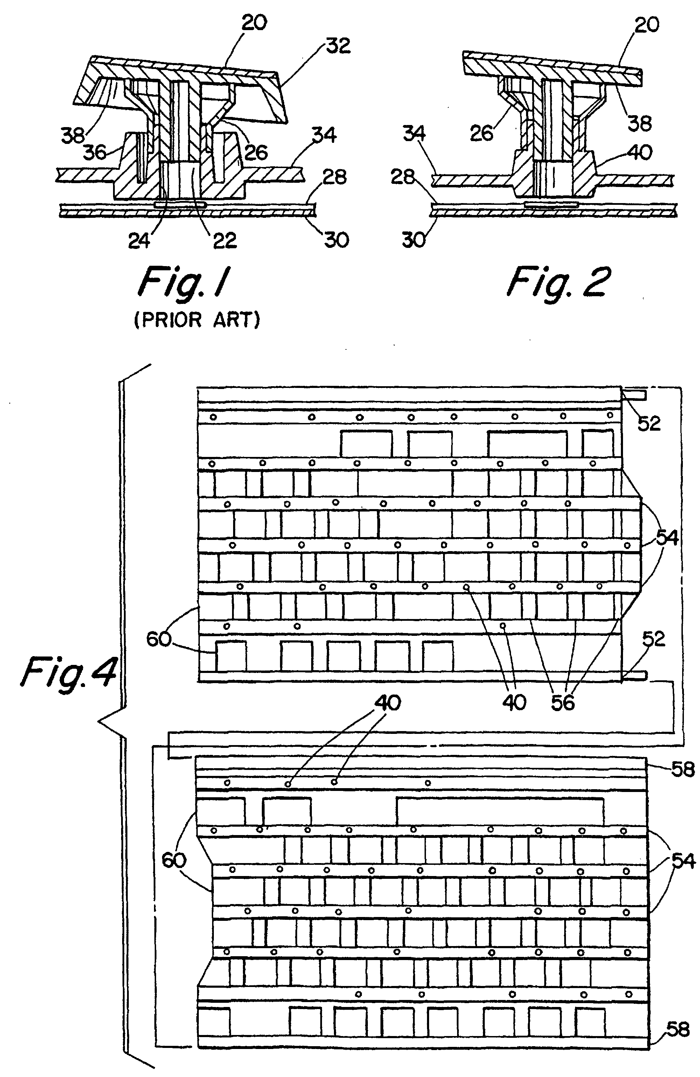

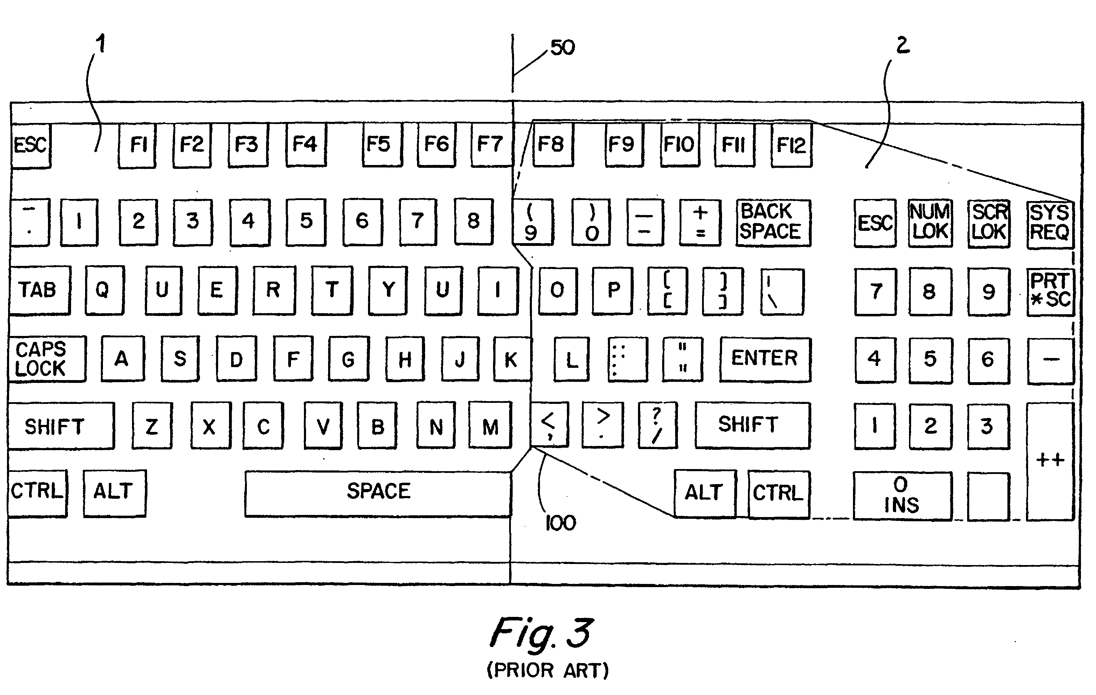

Similarly, Anonymous: "Briefcase-Portable Textwriter 100-Key Full-Size Keyboard", IBM Technical Disclosure Bulletin, vol. 27, no. 4A, September 1984 (1984-09), pages 2002-2004, XP002127305 New York, US, describes a three-section folding keyboard, with a long center section (2 in Fig. 1 and 4 of the drawing accompanying said Technical Disclosure) and two half-sized peripheral sections (10 and 14, id.). This is basically a Margolin-typed keyboard.

In Maltz M S: "Folding Keyboard" Xerox Disclosure Journal, US, Xerox Corporation, Stamford, Conn, vol. 14, no. 3, May 1989 (1989-05)-June 1989 (1989-06), page 139-140 XP0000247474, it is stated as follows:
'When folded up, the five rows of keys take much less room than when unfolded. The keys are staggered (odd rows displaced with respect to even rows by ½ a key), so the actuators of one row fit in the space between keytops and switch mechanisms of the adjacent rows."

The core idea of Maltz is that keys can be moved or translated longitudinally for storage, removing the space between the keys and thereby making a more compact keyboard for storage.

In EP-A-O 640 489 there is described a keyboard according to the preamble of claim 1. Basically, this EP-A-O 640 489 describes a Margolin-typed keyboard, except that the keys are depressed to reduce the vertical dimension when the keyboard is in its storage position.

Therefore, it is a primary objective of the present invention to improve the Margolin-type keyboard by reducing the volume of the keyboard such that the stacked height of a two-section keyboard is substantially less than twice the thickness of each individual section. Ideally, the stacked height of the two-section keyboard would not be appreciably thicker than each section individually.

It is a principal object of the invention to provide a computer with a keyboard which can be readily substantially reduced in volume and footprint for transport, and enlarged to provide a keyboard for touch-typing by normal-sized hands. It is a further object of the invention to provide a keyboard which can be readily raduced in volume and footprint for storage or transport, and enlarged to provide a keyboard for input of data or commands.

To achieve this, the keyboard of the invention is characterized by the features claimed in the characterizing part of claim 1.

In accordance with the present invention, there is provided a keyboard consisting of at least two sections designed such that portions of the keys, key structure, and other parts of one section can fit for storage between the key parts and key structure of another section, such that the total volume and footprint of the keyboard in its storage position are substantially less than those of a conventional keyboard, while providing the full size and functionality of a keyboard when in its operative position. There is also provided a computer including the keyboard described above, making possible a computer that heretofore could not be built.

### Brief Description of Drawings

Fig. 1 shows the cross-section of a typical key on a membrane switch keyboard.
Fig. 2 shows the cross-section of a modified key.
Fig. 3 shows the key cap pattern of a modified XT-type of keyboard.
Fig. 4 shows two keyboard sections with the key caps removed, revealing the perforated frame.
Fig. 5 shows cross-section of two keyboard sections during sliding compaction.
Fig. 6 shows cross-section of two keyboard sections compacted to plane of frame.
Fig. 7 shows cross-section of two keyboard sections compacted to plane of backing plate.
Fig. 8 shows a keyboard section in profile.
Fig. 9 shows cross-section of keyboard section, showing certain defined planes.
Fig. 10 shows layout of an hexagonal key cap keyboard.
Fig. 11 shows flexible key caps during section compaction.
Fig. 12 shows curved keyboard.
Fig. 13 shows a computer with a compactable keyboard.

### Best Mode for Carrying Out the Invention.

By way of general introduction, a keyboard may include a plurality of keys, a keyboard structure which holds the keys in place relative to one another and may provide some support against flexure of the keyboard, switch means which detect when a key is being pressed or activated, and means of communicating this detection to the computer (the "keyboard circuit" . ) For certain keyboards or keyboard sections, there may be a keyboard housing which encloses the back, sides, and a portion of the top of the keyboard; the keyboard housing may contain positioning means to place the keyboard at a comfortable angle to the user. A keyboard may lack some of the components set out above, and may contain other components.

There are innumerable methods of making keys, keyboard structures, switch means, keyboard circuits, keyboard housings, and keyboard positioning means, as those familiar with the art will understand, and the illustrations described herein should not be deemed to be a limitation on how the principal disclosed here can be applied. A purpose of this invention is to describe a method of compacting a keyboard that can be applied to a wide variety of keyboard types, using a variety of keys, key caps, key operating means, keyboard structures, switch means, keyboard circuits, keyboard housings, and keyboard positioning means, both those currently known and those that may be developed in the future. For purposes of illustration, we will describe a typical keyboard key using membrane switch technology, then modify the key to facilitate the invention described herein.

Fi g. 1 shows the cross-section of a representative key and certain associated parts of a keyboard. The keytop or key pad is the portion pressed by the finger of the typist to activate the key. Surrounding the key pad and serving to fill up the space between keys is a key pad skirt, 32. The key pad is operationally associated with a key structure which supports the key pad and causes the key pad to move in some prescribed manner when pressed. The key structure illustrated here consists of a stem or annulus, 22, which moves inside a second annulus, called here a stem receiver, 24, when the key pad is pressed. Surrounding the stem receiver is a stem receiver reinforcement member, 36.

The 'top" part of the key cap is that portion on which the finger would normally press, 20. As such, the top is a surface, not the point of highest elevation. The "bottom" of the key cap is the surface that lies under the top, and is illustrated here as 38. For purposes of orientation, the key cap will be deemed to be the "top" part of the key and keyboard section. The "bottom" or "lowest" portion of the key illustrated would be the bottom of the stem when the key is fully depressed.

When the key pad is released, the key pad and stem are returned to their initial position through the action of a "key-return mechanism" . The key return mechanism illustrated here consists of an annular elastomer of special shape, 26.

Not shown is a means of keeping the stem from slipping out of the top of the stem receiver. In the illustrated key, this consists of two prongs, one on each side of stem (oriented 90° from the cross-section of Fig. 1), which prongs catch on a portion of the stem receiver reinforcement member.

The term "key" includes those components necessary or helpful to transmit the force or movement of the typist's fingers on an individual key cap in a way that would be detected by the switch means associated with the key. For the illustated key, this would include, where present, the key cap, skirt, stem, stem receiver, key retention mechanism, and key structure. For other types of keys, other components would be included within the term "key".

The volume of a key consists of the continuous, closed, three-dimensional figure with the smalles: surface area that can fully enclose the components of a key. Where components not part of the key are attached to components of the key, the volume of a key is determined as if such non-key components have been severed. Where a component of a key also serves a function a part of the keyboard other than the key, then those portions of said component that are necessary for the proper functioning of the key are deemed to be a component of the key for purposes of determining the volume of the key.

In the key illustrated, the key cap and the key stem are fabricated into one piece. The term "key cap", as used here, will designate only those portions of the key cap necessary to accept the push of a finger. While the skirt, prongs, stem, stem to key cap connection means, and other such components (herein "ancillary components"), if any such ancillary components are present, may reinforce the key cap in accepting the push of a finger, such ancillary components are not deemed to be a part of the key cap.

The computer must detect when a key is pressed or activated and, additionally, when a key has been released. This function is performed by a switch means and the associated keyboard circuitry, 28. The switch means illustrated here is a membrane switch which is activated when the stem, 22, presses the membrane switch against the backing plate, 30. The backing plate illustrated here is part of the keyboard structure.

A keyboard membrane switch means would contain a plurality of membrane switches; usually at least one membrane switch is associated with each key. The membrane switch means may also contain keyboard circuits which alerts the computer that the key pad has been pressed or released. Numerous types of switch means and keyboard circuits are known to those skilled in the art; accordingly, an extended discussion is not required here.

It is possible, and frequently desirable, to incorporate two or more of the components of a keyboard into one unit. For instance, the stem receiver described here functions both as part of the key structure and the keyboard structure, since multiple stem receivers and associated stiffening members can be molded into one monolithic (e.g. plastic) part. The stem receivers illustrated here are connected by a thin plate, called by Mitsumi a "frame", 34, said frame being part of the keyboard structure. In other types of keyboards covered by this disclosure, the key pad, stem, key return mechanism, and switch means are assembled into one package, the outside of the package being a part of the key structure; the individual keys are then assembled into one computer keyboard. In such an instance, all parts contained within said package would be deemed to be a part of the key. Other means of making or assembling a key exist, and others may be developed in the future. It is an object of this invention to describe a method of compating a keyboard that will work with a variety of keys and key assembly techniques, both those currently known and those whch may be develped in the future.

The normal keyboard cannot be readily compacted (i.e. reduced in volume) even if the keyboard were made in a plurality of sections, e.g. as described by Margolin. Certain modifications should be made to the key pads, key structure, switch means, keyboard circuits, keyboard structure, or keyboard housing, or to any two or more of the above, so that portions of the keys (and possibly the keyboard structure and other components) of one keyboard section will fit between the keys of another keyboard section.

While there are a variety of methods of compacting a keyboard using my invention, 1 will now describe what I view as the best and most likely commercial embodiments of the invention.

In one such embodiment, the key pads, key structure, and keyboard structure are designed such that two sections slide together, with the keytops of one section moving between the keytops and the backing plate of a second section.

Fig. 2 illustrates a modification of the key illustrated in Fig. 1. The key pad skirt, 32, shown in Fig. 1, has been eliminated, and the stem receiver and stem receiver reinforcement member of Fig. 1 has been modified by increasing the size and strength of the stem receiver, 40, (herein the "modified stem receiver") and removing the stem receiver reinforcement member.

The keyboard described here would have two sections. Fig. 3 illustrates a modified "XT"-type keyboard in its operative position. No novelty is claimed for the illustrated key layout. The keyboard shown in Fig. 3 is approximately 2/3 of actual size. A dividing line, 50, shows where the two sections join.

The keyboard in Fig. 3 has 6 complete "rows" of keys; the complete top row consists of the "Escape" key (labeled "Esc"), and 12 function keys (labeled F1 through F12). For purposes of this application, at least two adjacent keys along a row would constitute a "row" of keys, while all of the keys along a row would constitute a "complete row" of keys.

In order to minimize the thickness of the compacted keyboard, the frame is perferated such that the perforations, or holes, correspond to the key cap size and location of the complementary keyboard section. Fig. 4 illustrates the keyboard of Fig. 3 with the sections separated and the key caps removed. The left section of the keyboard of Fig. 3, is shown at the top of Fig. 4; the right section is shown at the bottom of Fig. 4. Fig. 4 shows a plurality of modified stem receivers, 40, and the perforations of the frame, 60.

It is perfectly possible to build this keyboard where the frame consists essentially of longitudinal rods, 54; the cross-members of the frame, 56, being eliminated. In such an embodiment, the frame is not "perforated", but is essentially eliminated between rows of keys.

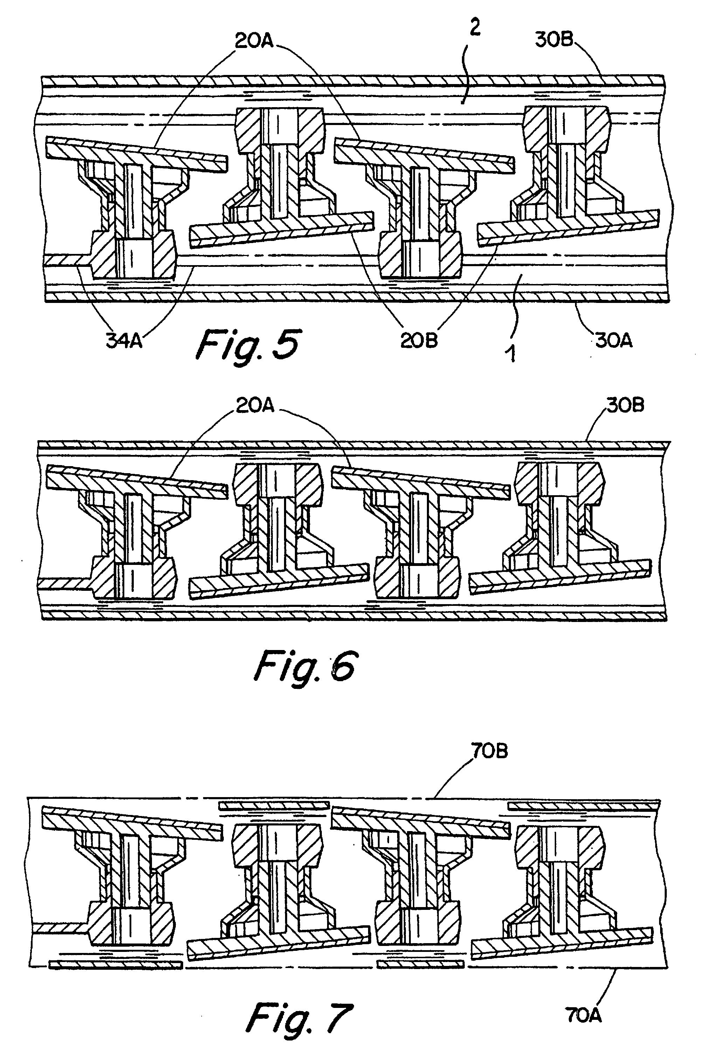

The keyboard is shown in Fig. 3 in an operative position. The keyboard can be compacted to its storage position as follows: Sections 1 and 2 are pulled apart; section 2 is rotated 180° around the axis defined by the row of keys (L ; ' Enter 45 6 -). The two sections are then brought together, such that the key tops of section 2 fit between the bottom of the key tops of section 1 and the top of the frame of section 1. Fig. 5 illustrates the relationship of the sections in cross-section during the process described in the sentence above. Section 1 is shown with its backing plate, 30A, on the bottom, while section 2 is shown with its backing plate, 30B, at the top of the figure. A key cap of section 2, 20B, is shown positioned between the key caps of section 1, 20A, and the frame of section 1, 34A. The frame is shown as broken lines along most of its length, to indicate that the frame contains perforations or holes, as is described above.

When the two sections are completely slid together, the key tops of section 1 will correspond to the perforations in the frame of section 2, and the key tops of section 2 will correspond to the perforations in the frame of section 1. By "correspond", I mean that, at this point, the backing plates of the two sections may be moved together, moving the key caps of section 1 through the corresponding perforations in the frame of section 2, and the key caps of section 2 through the corresponding perforations in the frame of section 1. This is illustrated in Fig. 6. The broken lines showing the frame have been deleted in this illustration.

If the membrane switch means and backing plate of each section are also perforated in a manner similar to that described for the frame, the backing plates of each section may continue to be moved together, as is illustrated in Fig. 7. The broken line, 70A, illustrates the bottom of the backing structure of section 1, and the broken line, 70B, illustrates the bottom of the backing structure of section 2 (the "bottom" of section 2 being on top because the section has been inverted).

The result is that a keyboard of the type illustrated, with key spacing of 19 mm, can be compacted with a maximum dimension of 190 mm, with a thickness (minimum profile) of the two compacted keyboards substantially equal to the thickness (minimum profile) of either section.

Whether a commercial version of the keyboard would contain perforations in the backing plate and membrane switch means is, obviously, a design decision; I merely point out the possibilities.

To form a conventional keyboard, the two sections are moved from their storage position to their "operative position" in a manner essentially reverse to that described above.

The method of joining illustrated here is telescoping rods at the top and bottom of each section, 52, that fit into receivers of the other section, 58. A variety of methods of joining two keyboard sections will be apparent to those familiar with the art. It is an object of this invention to describe a method of compacting keyboards that would be applicable to a variety of joining methods, both those currently known and those which may be developed in the future.

The keyboard illustrated in Fig. 3 is essentially one contiguous keyboard when the sections are joined in their operative position. A keyboard can be designed such that the operator can operate the keyboard with the two sections separated in use. I make no claims of innovation, positive or negative, for positioning of the keyboard for use. The invention here relates to means to compact at least two keyboard sections for transportation or storage (although the keyboard may be useable in the compacted position.)

For some keyboards, a connection or means of communication will have to be made between the keyboard circuits of the keyboard sections, or between the keyboard circuit of each keyboard section and the host computer. Here, I would suggest a conventional connector that attaches a multiple number of electrically conductive wires between the two keyboard sections. A variety of means of such connection will be known to those skilled in the art, including means that provide an electrical connection automatically when the two sections are joined, as well as means that require no physical touching, such as infra red light, sound waves, radio waves, and the like. The means of connection or communication would be well known to those skilled in the art, and need not be discussed further here.

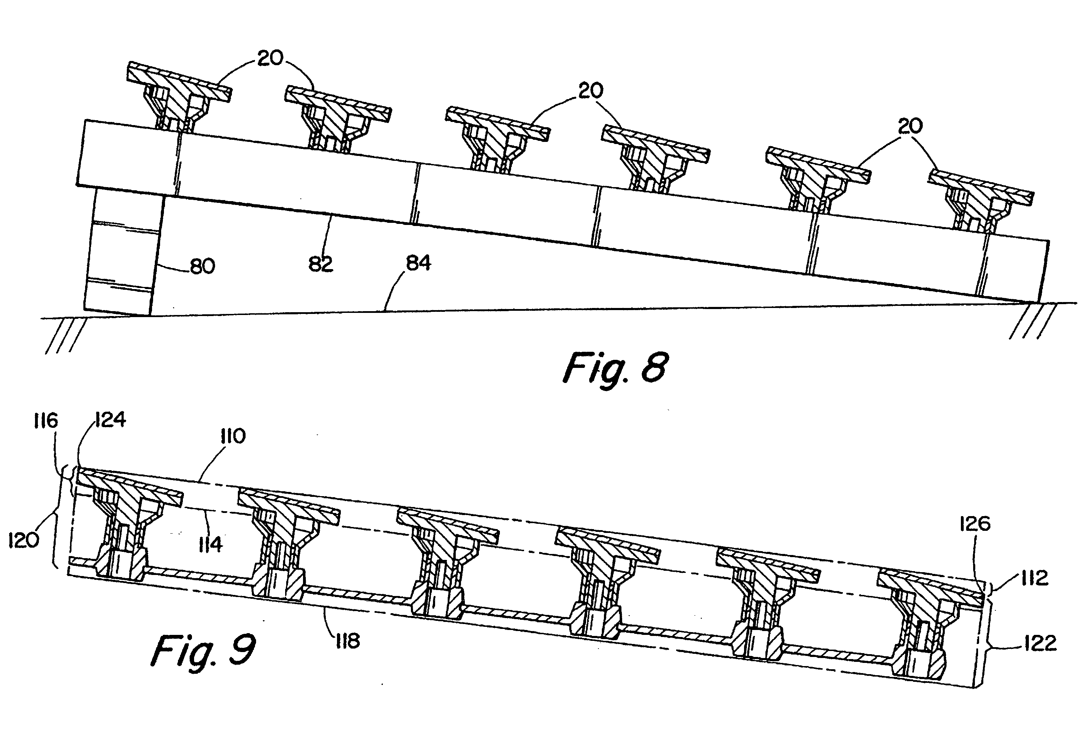

Normally, when a desktop keyboard (which is our paradigm for emulation) is placed upon a desk, the key caps of the top row of keys are higher than the key caps of the bottom row of keys. See Fig. 8, which shows a simplified profile of a desktop keyboard. This is accomplished either through the design of the keyboard housing or by providing a moveable component (I call them "ears") which can be pulled down to create the orientation described. Moveable ears are illustrated here, 80, which are part of the keyboard housing, 82 (shown partially shaded), which encloses the collection of keys. (The housing has been modified from those found on conventional keyboards, in order to facilitate the sliding compaction described earlier.) The keyboard is resting on a desk top, 84.

The description above is that of a fairly simply, largely planar keyboard. By planar, I mean that an euclidean plane could be made to pass through all of the similar components of the keys of a section. While such keyboards exist, some keyboards incorporate more elaborate designs. For instance, the angle of the key cap relative to the stem may change as we move up the rows, or the key itself may be oriented at different angles to the working surface (the desktop here), to achieve perceived ergonomic benefits. See Fig. 12. The net result is that euclidian planes cannot easily be used to describe certain surfaces.

These more elaborate designs creates the need of a more elaborate language than euclidean geometry to describe positional relationships. Therefore, I will have to make some definitions.

We need to name certain boundaries, surfaces, planes, and the like. The first is the key cap boundary, defined as the line of minimum length that will fully enclose the top of the key caps of each section. (As used in this application, the term "line" includes "line segments" of less than infinite length.) I will further require that the key cap boundary touch each key cap lying along the boundary, but it will not intersect any key cap of the section. (When I say that a line, plane, or other construct will not "intersect" another line, plane, part, component, or construct, I mean that it may touch, but will not pass through, said other line, plane part, component, or construct.) For reasons described herein, a key cap boundary need not lie along an euclidean plane. On Fig. 3, the broken line, 100 illustrates the "key cap boundary" of the right-hand section.

Fig. 9 shows a cross-section of a keyboard section, containing several rows of keys; only 1 key in each row is illustrated. Drawing an analogy from topology, if we lay lay a rubber sheet on top of the keyboard, such that a part of the rubber sheet touches at least one part of the top of each key cap of the section, but no part of the rubber sheet intersects any key cap, and bound that rubber sheet with a projection of the key cap boundary such that the projection is perpendicular to the rubber sheet, and arrange that bound rubber sheet such that it maintains a minimum surface area, we will have defined the "upper key cap plane" for that section. Broken line 110 illustrates one line along the upper key cap plane for the keyboard illustrated in Fig. 9; line 112 shows the projection of the key cap boundary for the bottom row of keys. (For purposes of the foregoing and following discussion, I will assume that the key cap boundary touches the upper row of keys at point 124, and the lower row of keys at point 126.)

The projection of the key cap boundary onto the rubber sheet defines the "boundary of the plane" or "plane boundary".

For purposes of our discussion, our "rubber sheet" is an infinitely thin sheet-essentially a two-dimensional imaginary construct. Using topological terms from *Surface Topology,* P.A. Firby and C.F. Gardiner, Ellis Horwood Limited, Publishers, Halsted Press Paperback Edition, first published 1982, pp. 15 - 17, the upper key cap plane is a bounded set, since it can be placed inside a finite box, but it is not a 2-dimensional manifold, since it has a one-dimensional boundary.

Similarly, if we take our imaginary rubber sheet and arrange it such that it just touches at east one part of the bottom of each key cap, but no part of the rubber sheet intersects any key cap of the section, and bound the rubber sheet by a projection of the key cap boundary such that the projection is perpendicular to the rubber sheet, and arrange that bound rubber sheet such that it maintains a minimum surface area, we will have defined the "lower key cap plane". Broken line 114 illustrates one line along the lower key cap plane for the keyboard illustrated in Fig. 9; line 116 shows the projection of the key cap boundary for the top row of keys. Note that there is a stem involved in our illustrated key, and that the imaginary rubber sheet of our definition can intersect (i.e. pass through) the stem. Plainly, I am defining spacial relationships, not structure ones, and the intersection of the stem by our imaginary rubber sheet does not physically sever the stem.

Similarly, if we take a rubber sheet and arrange it such that it touches the lowest portion of each key of a section, bound the rubber sheet by a projection of the key cap boundary such that the projection is perpendicular to the rubber sheet, and arrange that bound rubber sheet such that it maintains a minimum surface area, we will have defined the "lower key plane". Broken line 118 illustrates one line along the lower key plane for the keyboard illustrated in Fig. 9; lines 120 and 122 show the projection of the key cap boundary for the upper and lower rows of keys.

I need to make one other definition before moving on to "spaces"; I will define a "pseudocy lindrical surface" as the closed figure of minimum surface area having as its two edges the boundary of two bound planes.

I call it a "pseudocylindrical surface" because it is like a cylindrical surface--the lateral surface of a cylinder--except that a cylindrical surface circumscribes a circle, while the figure circumscribed by my pseudocylindrical surface need not be a circle. The terms "cylinder" and "cylindrical surface" would need no extended discussion to those familiar with the art. See, e.g. Van Nostrand's Scientific Encyclopedia, published by D. Van Nostrand Company, Inc., (New York), 14th Edition (1968) at p. 482.

Several closed 3-dimensional figures, which 1 will call "spaces", can now be defined. The first space is defined by two bound planes, the upper key cap plane and the lower key cap plane with a lateral side consisting of the pseudocylindrical surface defined by the boundaries of said two planes, and is called the "section key cap space" .

The second space is defined by two bound planes, the upper key cap plane and the lower key plane, with a lateral side consisting of the pseudocylindrical surface defined by the boundaries of said two planes, and is called the "section key space".

The third space is defined by two bound planes, the lower key cap plane and the lower key plane, with a lateral side consisting of the pseudocylindrical surface defined by the boundaries of said two planes, and is called the "section capless key space".

The volume enclosed by the section key space in the illustrated keyboard equals the sum of the volumes enclosed by the section key cap space and the section capless key space, because lines 116, and 120 are parallel to each other, and lines 112 and 122 are parallel to each other. It would be possible to construct a keyboard in which the comparable lines are not parall el. In such an instance, the equality mentioned at the beginning of this paragraph may not be precise, because the projection of the key cap boundary onto the various planes may define slightly different spacial figures, depending upon the precise configuration of the keys and the keyboard section. (In practice, the inequality would be minute, and would have no practical repercussions, but is mentioned to avoid any confusion.) The invention involves, in part, designing a keyboard such that there are points which are common to (that is, contained within) the spaces of two sections when the keyboard is in its storage position but not when the keyboard is in expanded position.

There are smaller spaces that can be defined that will be useful in describing my invention, but before doing so, I need to describe another embodiment of the invention.

The method described above is certainly not the only method of arranging the two sections such that there are points common to the space of two sections when the keyboard is in its storage position.

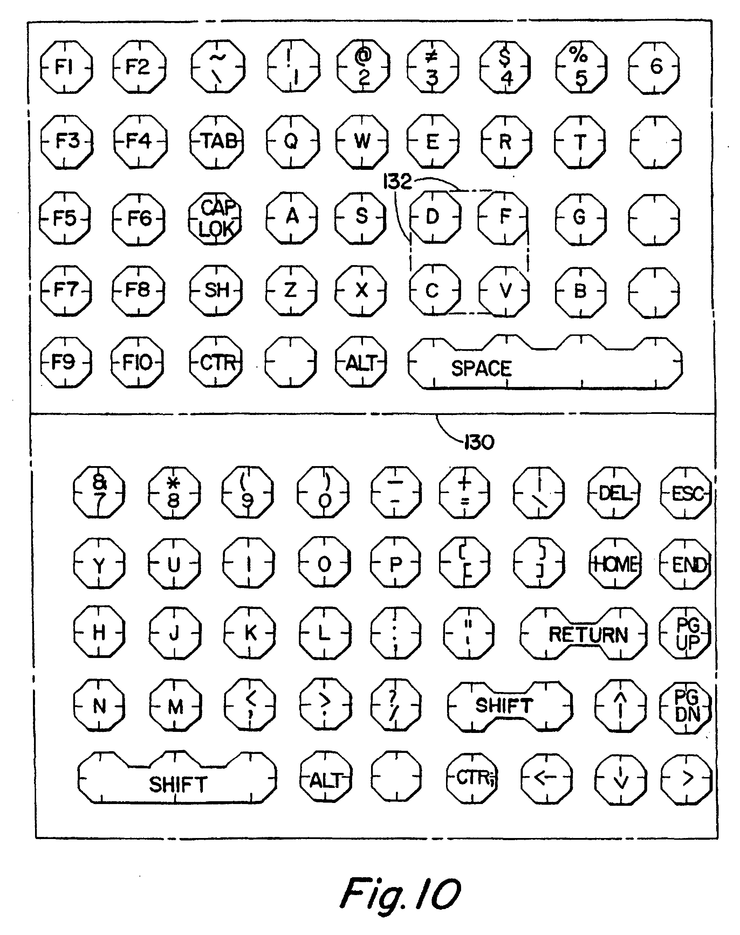

Another method is to alter the size and shape of the traditional key pad so that the key caps of one section will pass through the upper key cap plane of another section. Fig. 10 shows the key cap layout of two keyboard sections, section 1 containing the keys operated by the left hand shown at the top of the illustration, and section 2 containing the keys operated by the right hand is shown at the bottom of the illustration. Each section contains a plurality of key pads having a hexagonal shape, designed such that a majority of the key pads of one section can be passed through the plane of the key pads of the second section. If the key structure and keyboard structure are suitably designed (e.g. as described above), and the backing plate (if used) is suitably perforated and the keyboard circuits are suitably formed or routed, the two sections can be compressed together, such that the total thickness of the two sections when mated is approximately the thickness of each (single) section.

To understand the principal, fold Fig. 10 along the broken line, 130. Except at the periphery, the key caps of section 2 fit between the key caps of section 1.

Note that the key layout shown in Fig. 10 includes the positioning of the function keys and cursor keys in a manner different from that shown in Fig. 3. This, illustrates two points made earlier. The first is that this invention will work with a variety of key layouts. The second is that the keyboard can be designed such that the sections are not essentially contiguous when placed in their respective operative position. The key layout shown in Fig. 10 would work best having an operative position with the two sections turned at an angle to one other, or separated by some distance. The keys are not staggered, as they are in the QWERTY (left hand) section of the keyboard in Fig. 3, for the same reason that the keys on a numeric pad (the right hand portion of the keyboard in Fig. 3) are not staggered. This reason is that if the wrist is not bent to operate the keyboard, the keys do not need to be staggered.

The shape of the key pads shown is illustrative only, as would be familiar to those skilled in the art. It is an object of this invention to describe a method of compacting a keyboard containing a wide variety of key cap shapes, including those that are currently known and those which may be developed in the future.

The same principal could be used to press the keyboard sections face to back, providing that the backing structure of one section (if present) is perforated to permit the keys of another section to penetrate said backing structure. If a keyboard with the keys staggered were desired, this "front to back" method of compaction would probably work best. Another variation is a keyboard in which the keyboard sections are compacted back-to-back. If the "back to back" configuration were used, the "frame", 34, would probably be moved toward the key cap, and the backing plate would either be dispensed with, incorporated within the frame, or consist essentially of rods.

I mentioned earlier that a keyboard may be operable in the "storage" position. Practically, a keyboard would normally only have a portion of its keys readily operable at any one time in its storage position; exceptions include the "back-to-back" keyboard storage position described just above and the storage illustrated in Fig. 7, where conceivably an operator could operate both sides of the compacted keyboard at essentially the same time.

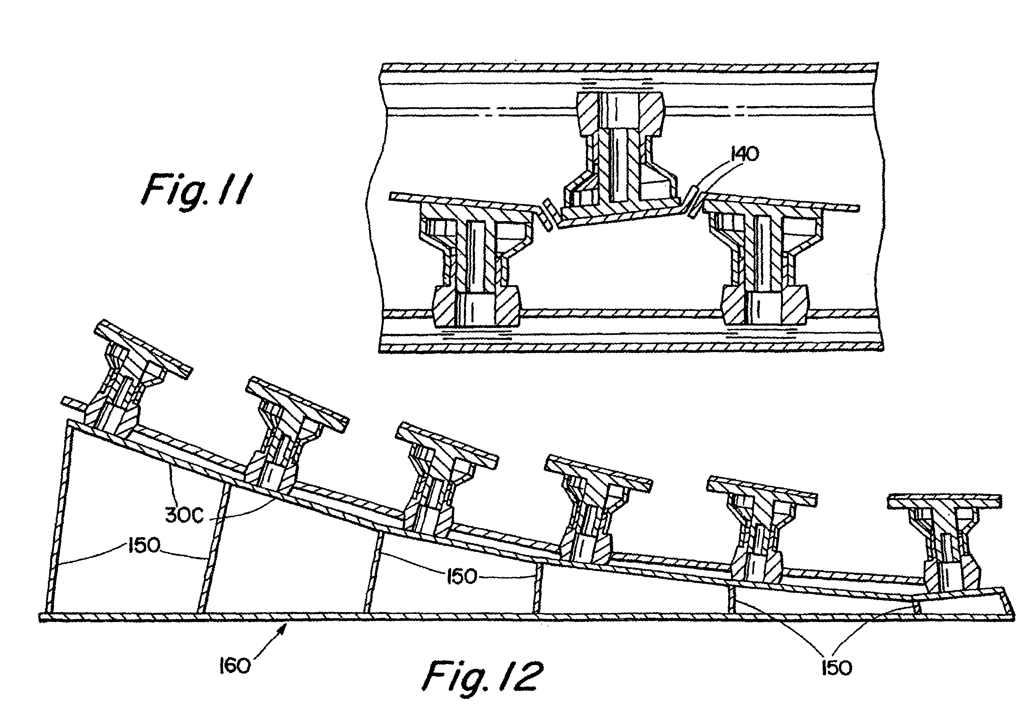

An alternative to changing the shape of the keys is to make a portion of the top of the key pads out of flexible or hinged material, Fig 11, 140, so that a portion or all of the key pads of one section move when pressed through the plane of the pads of a second section. This top can be manufactured out of mylar or the key cap or a portion of the key cap can be hinged, although those skilled in the art will be aware of a variety of other materials and methods that would work with this invention. It is an object of this invention to describe a method that would work with a variety of materials and methods, both those currently known and those that may be developed in the future.

Having described other embodiments of the invention, 1 will now turn to defining other spaces that will be utilized in claims.

In the keyboard illustrated in Fig. 10, if the lower section is rotated around line 130 and pressed into the upper section, key cap labeled "7" will fit between four key caps, those labeled "F7", "F8", "F9", and "F10". The four keys associated with the last four key caps mentioned are called here a "bounding key set".

For purposes of this application, a bounding key set will consist of two contiguous rows of two keys each of one section. There can be many bounding key sets in any section, and any one key can be a member of several bounding key sets. Thus, for example, the "S" key cap is a member of four bounding key sets: one set consists of the "A", "S", "Z", "X" keys; another set consists of the "S", "D", "X", and "C" set; another set consists of the "Q", "W", "A", and "S" keys; the fourth set consists of the " "W," "E", "S", and "D" keys.

For each bounding key set, we can define a "bounding key set upper key cap plane". We will do so by first defining a "set boundary line", consisting of the line of minimum length that will fully enclose the key caps of a bounding key set, such set boundary line touching but not intersecting each key cap in the bounding key set. Line 132 illustrates the set boundary line for the bounding key set "D", "F", "C", "V".

If we take our now familiar 2-dimensional rubber sheet and lay it on top of the key caps of the bounding key set such that a part of the rubber sheet touches a portion of the top of each key cap of the bounding key set, but no part of the rubber sheet intersects any key cap of the bounding key set, and bound that rubber sheet with a projection of the set boundary line of the set such that the projection is perpendicular to the rubber sheet, and arrange that bound rubber sheet such that it maintains a minimum surface area, we will have defined a ' bounding key set upper key cap plane".

Similarly, if we take a rubber sheet and arrange it such that it just touches the bottom of each key cap of a bounding key set, but no part of the rubber sheet intersects any key cap of the bounding key set, and bound that rubber sheet by a projection of the set boundary line of the set such that the projection is perpendicular to the rubber sheet, and arrange said bound rubber sheet such that it maintains a minimum surface area, we will have defined the "bounding key set lower key cap plane".

Similarly, if we take a rubber sheet and arrange it such that it touches the lowest portion of each key of the bounding key set, bound the rubber sheet by a projection of the set boundary line of the set such that the projection is perpendicular to said rubber sheet, and arrange that bound rubber sheet such that it maintains a minimum surface area, we will have defined the "bounding key set lower key plane".

Three bounding key spaces can now be defined. The first space is defined by two bound planes, the bounding key set upper key cap plane and the bounding key set lower key cap plane with a lateral side consisting of the pseudocylindrical surface defined by the boundaries of said two planes, and is called the "bounding key set cap space".

The second space is defined by two bound planes, the bounding key set upper key cap plane and the bounding key set lower key plane, with a lateral side consisting of the pseudocylindrical surface defined by the boundaries of said two planes, and is called the "bounding key set space".

The third space is defined by two bound planes, the bounding key set lower key cap plane and the bounding key set lower key plane, with a lateral side consisting of the pseudocylindrical surface defined by the boundaries of said two planes, and is called the "bounding key set capless space".

In general, the volume contained within the bounding key set space is approximately equal to the sum of the volumes contained within the bounding key set cap space and the bounding key set capless space.

Portions of some of the keys of one section can be placed into spaces defined above in the second section. For example, for a face-to-face insertion, some of the key caps of the bottom section of Fig. 10 can be placed within the bounding key set capless spaces of another section. (The plural is somewhat awkward; in general, only one key cap will fit into one "space' of the other section; thus several key caps will separately fit into several "spaces" of the other section.) Indeed, if the keyboard is properly formed, virtually an entire key of one section could be placed within a bounding key set space of another section, and a majority of the keys of each section could be placed within the bounding key set spaces of another section. (Not every key of a section will fit within a bounding key set space of another section, because of problems at the boundary. The space-saving features would be obvious to those skilled in the arts, and the claims are formed to take into account this boundary difficulty.)

A reader could erroneously believe that a keyboard section would remain essentially fixed. By that, I mean that a cross-section of the keyboard would appear the same, regardless of whether the keyboard were in its storage configuration or its operating configuration. That is not necessarily true.

As was mentioned above, a keyboard in cross-section may be described by curves rather than straight lines. For usage, the keyboard may have rows of keys that curve upward from an operating surface. However, that keyboard could be configured such that it is essentially flat in its storage configuration (as shown in Fig. 9), but is curved in its operational configuration (as shown in Fig. 12). I will call such a change a "change in configuration" of the keyboard. A change in configuration of the keyboard could be effected, for example, by hinged supports, 150, attached to a lower backing plate, 160, supporting a hinged or flexible upper backing plate, 30C. By "curved" 1 include segmented sections which approximate a curve, much as the original Ferris Wheel used straight segments to create the "curved" boundary of the wheel. Fig. 12 is illustrative of the concept, and those knowledgeable in the art can quickly conceive how this concept can be utilized in making other keyboards. Indeed, it is an object of this invention to describe how to compact keyboards which can be changed in configuration, both those currently known and those that may be invented in the future.

Many of the keyboards described here can be manufactured using traditional techniques. The advantage of the first method described above (where the two sections are slid together during compaction) is that it permits use of a key top similar in size and shape to those of a current desktop computer keyboard; the advantage of the second method (exemplified by the hexagonal key caps) is that the two sections can be more quickly compacted and protracted; the method of the flexible key caps attempts to obtain the advantages of both the first and second methods. What is, in fact, best will be worked out in the market place; there may well be a place for a variety of compacting keyboards using the invention described here.

A model I fabricated to prove the design can be moved from its compacted position to its operative position in a few seconds. While a commercial version of such a keyboard may contain stops, guides, reinforcing members, and the like, such details would be well known to those skilled in the art and need not be discussed further here.

By way of information, the model (demonstrating the concept illustrated in Figs. 3 - 7), when compacted, is approximately 136 mm by 187 mm. A keyboard of the type shown in Fig. 10 would be approximately 102 mm by 172 mm when compacted. The difference in size in caused primarily by the different key layout configurations; both illustrate the remarkable compaction possible with this invention.

Indeed, if a keyboard were designed with five rows of keys, similar to those on most mechanical typewriters, with the keys were specially shaped, either with the flexible key top described herein or with a nominal diameter of approximately 9.6 mm, and with special keys (e.g. the "function" keys) operated by pressing a toggle and another key, and this keyboard were split into two sections, one consisting of three rows and one consisting of two rows, and each section were split again along the length of the rows, it would be possible to build a fully-serviceable keyboard upon which the adult human hand can touch type (i.e. with nominal spacing between key centers of 19 mm) which can be compacted into a footprint of approximately 51 mm by 140 mm. Other variations would be obvious to those skilled in the art.

As was suggested previously, with this invention, it is possible to build a computer that could not be built before-a fully useable computer, with a keyboard upon which the adult human hand can comfortably and efficiently touch type, in a computer that could fit comfortably in a suit coat side pocket or a fairly small purse. Those familiar with the art would have no difficulty designing such a computer, after being advised of the keyboard disclosed herein.

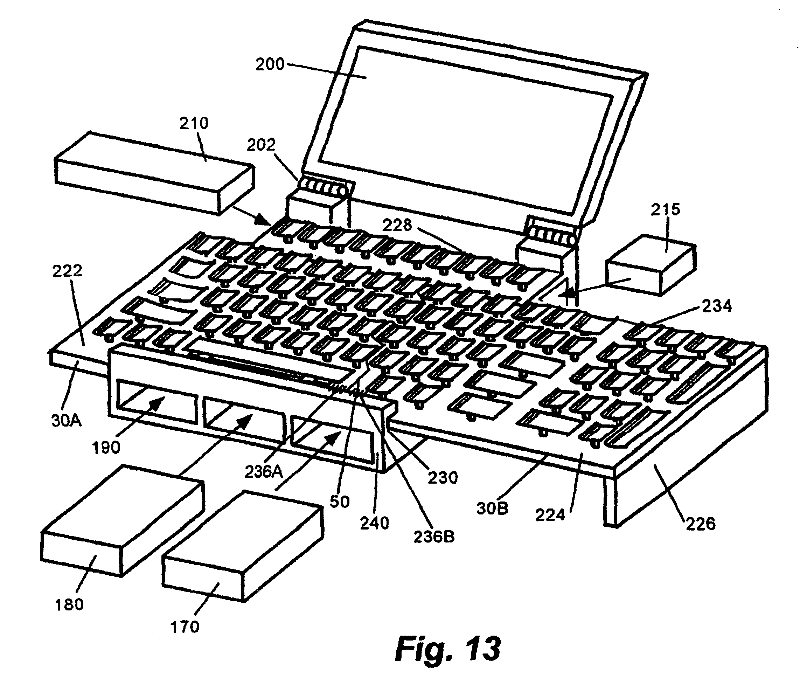

Fig. 13 illustrates such a computer. It contains a motherboard (170) (e.g. S-MOS Cardio^{TM} 4.86), a hard-disk drive (180), a PCMCIA (P C Memory Card International Association) slot for additional components (190), an LCD (Liquid Crystal Display) (200), a battery (210), and a voltage regulator (215), and, of course, a fully useable keyboard of the type describe elsewhere. The constituent parts are shown removed from the case (240), with arrows showing where said parts would be placed.

The keyboard of Fig. 13 comes in 2 sections, Section A (the left section) (222), and the right section, Section B (224), with the line (50) showing the division between said two sections.

The backing plate of each of the two keyboard sections (30A, 30B) extends beyond the footprint of the computer when the keyboard is extended. The keyboard illustrated is an "XT" keyboard, as is described above. The typewriter keys are centered on the display; the combined cursor/numeric keypad (234) is positioned on the right side of the keyboard, and the backing plate of far-most right section is supported by a support (226).

There are a wide variety of ways in which to connect the computer motherboard and the two keyboard sections; one method is to place electrical connections along the base plate of each section and corresponding connections along the edge of the computer case (236A, 236B), such that when said keyboard sections are correctly aligned, an electrical connection exists between said sections and the computer case. (Unless a microcontrolfler is atached to each section, more connectors than shown will be required, but this illustrates the concept.) Since the motherboard is attached to the computer case, it is then a simple matter to run electrical connections to the motherboard from the computer case. Those familiar with the art will be aware of a variety of ways to make such connections, including electrical, photo-optical, radio, sound, and other connections; it is an object of this invention to work with a variety of means of connecting the keyboard to the motherboard of the computer, both those currently known and those which are developed in the future.

Cursor keys (228) are placed along the top of the unit, and are not contracted or expanded in this embodiment.

To c lose the computer for transport, the right-hand keyboard section is moved to the left, and the left-hand keyboard section is pulled from grooves (230) fabricated in the computer housing (240). The left-hand section is then rotated 180° around its long axis, and the keys of the left-hand section then fit into the right-hand section, as is described elsewhere in this application. The LCD display is then folded down on its hinge (202), and the entire unit when compacted can then be placed into a side suit coat pocket or a fairly small purse.

The computer described above is illustrative only; those familiar with the art could make a large variety of computers, utilizing the type of keyboards disclosed in this Application, which could not be built without this disclosure. Such alternative computers might inclu ie one with a detachable or detached keyboard. It is an object of this invention to work with a large variety of computers and computer-component configurations, both those currently known and those which are developed in the future, and with a wide variety of keyboards and keyboard configurations, both those currently known and those which are developed i n the future.

## Claims

1. A keyboard, for inputting data, including at least two keyboard sections (1, 2), a first section (1) and a second section (2), each such section (1, 2) including:
a. a keyboard section structure, and
b. a plurality of keys, including at least one BOUNDING KEY SET (132), said BOUNDING KEY SET consisting of two contiguous rows of two keys each of one section, each key within said plurality of keys including
i. a key cap (20) which is used to activate said key, and
ii. switch means (22, 24, 26) associated with said key,
c. a SECTION KEY SPACE (110, 112, 122, 118, 120), and
d. a SECTION CAPLESS KEY SPACE,
in which said keyboard sections (1, 2) can be arranged in at least two positions,
one a keyboard-operative position in which said sections (1, 2) can be arranged such that the keys of said sections (1, 2) can be sued to input data, and the other a keyboard-storage position,
**characterized in** further including means (20A, 20B, 38, 40) for each key within said BOUNDING KEY SET (132) of said, first section (1), for placing the key cap (20) of said. key within said SECTION KEY SPACE (110, 112, 122, 128, 120) of said second section (2).

2. A keyboard of the type of claim 1, **characterized in** including means (20A, 20B, 38, 40), for each key within said BOUNDING KEY SET (132) of said second section (2), for placing the key cap (20) of said key within said SECTION KEY SPACE of said first section (1).

3. A keyboard of the type of claim 1, **characterized in** including means (20A, 20B, 38, 40) , for a majority of said plurality of keys of said first section (1), for placing the key caps (20) of said keys within said SECTION KEY SPACE of said second section (2).

4. A keyboard of the type of claim 3, **characterized in** including means (20A, 20B, 38, 40), for a majority of said plurality of keys of said second section (2), for placing the key caps (20) of said keys within said SECTION KEY SPACE of said first section (1).

5. A keyboard of the type of claim 1, **characterized in** including means (20A, 20B, 38, 40), for each key within said BOUNDING KEY SET of said first section (1), for placing the key cap (20) of said key within said SECTION CAPLESS KEY SPACE of said second section (2).

6. A keyboard of the type of claim 5, **characterized in** including means (20A, 20B, 38, 40), for each key within said BOUNDING KEY SET of said second section (2), for placing the key cap (20) of said key within said SECTION CAPLESS KEY SPACE of said first section (1).

7. 4. A keyboard of the type of claim 5, **characterized in** including means (20A, 20B, 38, 40) for placing the key caps (20) of a majority of said plurality of keys of said first section (1) within said SECTION CAPLESS KEY SPACE of said second section (2).

8. A keyboard of the type of claim 7, **characterized in** including means (20A, 20B, 38, 40) for placing the key caps (20) of a majority of said plurality of keys of said second section (2) within said SECTION CAPLESS KEY SPACE of said first section (1).

9. A keyboard of the type of claim 1, **characterized in that** each of said section (1, 2) includes:
e. at least one BOUNDING KEY SET SPACE, and
f. at least one BOUNDING KEY SET CAPLESS SPACE,
wherein the keyboard includes means (20A, 20B, 38, 40), for each key within said BOUNDING KEY SET of said first section (1), for placing the key cap (20) of said key within a BOUNDING KEY SET SPACE of said second section (2).

10. A keyboard of the type of claim 9, **characterized in** including means (20A, 20B, 38, 40) , for each key within said BOUNDING KEY SET of said second section (2) , for placing the key cap (20) of said key within a BOUNDING KEY SET SPACE of said first section (1).

11. A keyboard of the type of claim 9, **characterized in** including means (20A, 20B, 38, 40), for a majority of said plurality of keys for said first section (1), for placing the key cap (20) of each such key within a BOUNDING KEY SET SPACE of said second section (2).

12. A keyboard of the type of claim 11, **characterized in** including means (20A, 20B, 38, 40) , for a majority of said plurality of keys for said second section (2), for placing the key cap (20) of each such key within a BOUNDING KEY SET SPACE of said first section (1).

13. A keyboard of the type of claim 9, **characterized in** including means (20A, 20B, 38, 40), for each key within said BOUNDING KEY SET of said first section (1), for placing the key cap (20) of said key within a BOUNDING KEY SET CAPLESS SPACE of said second section (2).

14. A keyboard of the type of claim 13, **characterized in** including means (20A, 20B, 38, 40), for each such key within said **BOUNDING KEY SET** of said second section (2), for placing the key cap (20) of said key within a BOUNDING KEY SET CAPLESS SPACE of said first section (1).

15. A keyboard of the type of claim 13, **characterized in** including means (20A, 20B, 38, 40), for a majority of said plurality of keys of said first section (1), for placing the key cap (20) of each such key within a BOUNDING KEY SET CAPLESS SPACE of said second section (2).

16. A keyboard of the type of claim 15, **characterized in** including means (20A, 20B, 38, 40), for a majority of said plurality of keys of said second section (2), for placing the key cap (20) of each such key within a BOUNDING KEY SET CAPLESS SPACE of said first section (1).

17. A keyboard of the type of claim 1, **characterized in that** each of said first section (1) and second section (2) further includes :
e. at least one BOUNDING KEY SET SPACE,
wherein the keyboard includes means (20A, 20B, 38, 40), for each key within said BOUNDING KEY SET of said first section (1), for placing a majority of the volume of each such key within a BOUNDING KEY SET SPACE of said second section (2).

18. A keyboard of the type of claim 17, **characterized in** including means (20A, 20B, 38, 40), for each key within said BOUNDING KEY SET of said second section (2), for placing a majority of the volume of each such key within a BOUNDING KEY SET SPACE of said first section (1).

19. A keyboard of the type of claim 17, **characterized in** including means (20A, 20B, 38, 40) , for a majority of said plurality of keys of said first section (1), for placing a majority of the volume of each such key within a BOUNDING KEY SET SPACE of said second section (2).

20. A keyboard of the type of claim 19, **characterized in** including means (20A, 20B, 38, 40), for a majority of said plurality of keys of said second section (2), for placing, a majority of the volume of each such key within a BOUNDING KEY SET SPACE of said first section (1).

21. A keyboard of the type of claim 1, **characterized in** including a first array of keys operative selectively on a first electronic circuit, said keyboard being physically detachable into a plurality of keyboard portions (1, 2) each such keyboard portion (1, 2) bearing a section of said array of keys and each of said keyboard portions (1, 2) bearing a section of said electronic circuit, each of said keyboard portions (1, 2) being adapted to electronically interconnect with adjacent keyboard portions (1, 2) for selective operations on said first electronic circuit, and means (20A, 20B, 38, 40) , for placing at least 50% of the space encompassed by the SECTION KEY SPACE of one detachable portion (1) of said keyboard within the SECTION KEY SPACE of another detachable portion (2) of said keyboard.

22. A computer comprising a keyboard as in any one of the preceding claims.

## Patentansprüche

1. Tastatur zur Eingabe von Daten, umfassend mindestens zwei Tastaturbereiche (1, 2), einen ersten Bereich (1) und einen zweiten Bereich (2), wobei jeder Bereich (1, 2) umfasst:
a. eine Tastaturbereichs-Struktur, und
b. eine Mehrzahl von Tasten, enthaltend mindesten einen Satz verbindender Tasten (132), wobei der Satz verbindender Tasten aus zwei benachbarten Reihen von zwei Tasten in jedem Bereich besteht, und jede Taste in der Mehrzahl von Tasten
i. eine Tasten-Kappe (20), welche die besagte Taste aktiviert, und
ii. Schalter-Einrichtungen (22, 24, 26), die mit besagter Taste verbunden sind,
umfasst;
c. einen Bereich für die Tasten (110, 112, 122, 118, 120) , und
d. einen Bereich für Tasten ohne Kappe,
in denen besagte Tastaturbereiche (1, 2) in mindestens zwei Positionen angeordnet werden können,
eine Tastatur-operative Position in besagte Bereiche (1, 2) so angeordnet werden können, dass die Tasten der genannten Bereiche (1, 2) zur Eingabe von Daten genutzt werden können und die andere, eine Tastatur-Lagerungs-Position,
**dadurch gekennzeichnet, dass** sie weiter Mittel (20A, 20B, 38, 40) für jede Taste innerhalb des Satzes verbindender Tasten (132) des ersten Bereiches (1) enthält, um die Tasten-Kappe (20) besagter Taste innerhalb des Bereiches für die Tasten (110, 112, 122, 128, 120) des besagten zweiten Bereichs zu platzieren.

2. Tastatur nach Anspruch 1, **dadurch gekennzeichnet, dass** sie Mittel (20A, 20B, 38, 40) für jede Taste in besagtem Satz verbindender Tasten (132) des zweiten Bereichs (2) umfasst, um die Tasten-Kappe (20) der Taste in dem Bereich für die Tasten (110, 112, 122, 128, 120) des ersten Bereichs (1) zu platzieren.

3. Tastatur nach Anspruch 1, **dadurch gekennzeichnet, dass** sie Mittel (20A, 20B, 38, 40) für die Mehrzahl der besagten Vielzahl von Tasten des ersten Bereichs (1) umfasst, um die Tasten-Kappen (20) der Tasten in dem Bereich für die Tasten (110, 112, 122, 128, 120) des zweiten Bereichs zu platzieren.

4. Tastatur nach Anspruch 3, **dadurch gekennzeichnet, dass** sie Mittel (20A, 20B, 38, 40) für die Mehrzahl der besagten Vielzahl von Tasten des zweiten Bereichs (1) umfasst, um die Tasten-Kappen (20) der Tasten in dem Bereich für die Tasten des ersten Bereichs zu platzieren.

5. Tastatur nach Anspruch 1, **dadurch gekennzeichnet, dass** sie Mittel (20A, 20B, 38, 40) für jede Taste des Satzes verbindender Tasten, des ersten Bereichs (1) umfasst, um die Tasten-Kappe (20) der Taste in dem Bereich für Tasten ohne Kappe des zweiten Bereichs zu platzieren.

6. Tastatur nach Anspruch 5, **dadurch gekennzeichnet, dass** sie Mittel (20A, 20B, 38, 40) für jede Taste des Satzes verbindender Tasten, des zweiten Bereichs (2) umfasst, um die Tasten-K appe (20) der Taste in dem Bereich für Tasten ohne Kappe des ersten Bereichs zu platzieren.

7. Tastatur nach Anspruch 5, **dadurch gekennzeichnet, dass** sie Mittel (20A, 20B, 38, 40) umfasst, um die Tasten-Kappen (20) einer Mehrzahl der besagten Vielzahl von Tasten des ersten Bereichs in dem Bereich für Tasten ohne Kappe des zweiten Bereichs zu platzieren.

8. Tastatur nach Anspruch 7, **dadurch gekennzeichnet, dass** sie Mittel (20A, 20B, 38, 40) umfasst, um die Tasten-Kappen (20) einer Mehrzahl der besagten Vielzahl von Tasten des zweiten Bereichs in dem Bereich für Tasten ohne Kappe des ersten Bereichs zu platzieren.

9. Tastatur nach Anspruch 1, **dadurch gekennzeichnet, dass** jeder Bereich (1,2) enthält:
e. mindestens einen Raum für den Satz verbindender Tasten, und
f. mindestens einen Raum für den Satz verbindender Tasten ohne Kappe,
wobei die Tastatur Mittel (20A, 20B, 38, 40) für jede Taste innerhalb des Satzes verbindender Tasten des ersten Bereichs (1) umfasst, um die Tasten-Kappe (20) der Taste in dem Raum für den Satz verbindender Tasten des zweiten Bereichs (2) zu platzieren.

10. Tastatur nach Anspruch 9, **dadurch gekennzeichnet, dass** sie Mittel (20A, 20B, 38, 40) für jede Taste innerhalb des Satzes verbindender Tasten des zweiten Bereichs (2) umfasst, um die Tasten-Kappe (20) der Taste in dem Raum für den Satz verbindender Tasten des ersten Bereichs (1) zu platzieren.

11. Tastatur nach Anspruch 9, **dadurch gekennzeichnet, dass** sie Mittel (20A, 20B, 38, 40) für eine Mehrzahl der besagten Vielzahl von Tasten des ersten Bereichs (1) umfasst, um die Tasten-Kappe (20) jeder solchen in dem Raum für den Satz verbindender Tasten des zweiten Bereichs (2) zu platzieren.

12. Tastatur nach Anspruch 11, **dadurch gekennzeichnet, dass** sie Mittel (20A, 20B, 38, 40) für eine Mehrzahl der besagten Vielzahl von Tasten des zweiten Bereichs (2) umfasst, um die Tasten-Kappe (20) jeder solchen in dem Raum für den Satz verbindender Tasten des ersten Bereichs ( 1 ) zu platzieren.

13. Tastatur nach Anspruch 9, **dadurch gekennzeichnet, dass** sie Mittel (20A, 20B, 38, 40) für jede Taste innerhalb des Satzes verbindender Tasten des ersten Bereichs (1) umfasst, um die Tasten-Kappe (20) der Taste in dem Raum für den Satz verbindender Tasten ohne Kappe des zweiten Bereichs (2) zu platzieren.

14. Tastatur nach Anspruch 13, **dadurch gekennzeichnet, dass** sie Mittel (20A, 20B, 38, 40) für jede solche Taste innerhalb des Satzes verbindender Tasten des zweiten Bereichs (2) umfasst um die Tasten-Kappe (20) der Taste in dem Raum für den Satz verbindender Tasten ohne Kappe des ersten Bereichs (1) zu platzieren.

15. Tastatur nach Anspruch 13, **dadurch gekennzeichnet, dass** sie Mittel (20A, 20B, 38, 40) für eine Mehrzahl der besagten Vielzahl von Tasten des ersten Bereichs (1) umfasst, um die Tasten-Kappe (20) jeder solchen in dem Raum für den Satz verbindender Tasten ohne Kappe des zweiten Bereichs (2) zu platzieren.

16. Tastatur nach Anspruch 15, **dadurch gekennzeichnet, dass** sie Mittel (20A, 20B, 38, 40) für eine Mehrzahl der besagten Vielzahl von Tasten des zweiten Bereichs (2) umfasst, um die Tasten-Kappe (20) jeder solchen in dem Raum für den Satz verbindender Tasten ohne Kappe des ersten Bereichs (1) zu platzieren.

17. Tastatur nach Anspruch 1, **dadurch gekennzeichnet, dass** jeder Bereich (1, 2) enthält:
e. mindestens einen Raum für den Satz verbindender Tasten,
wobei die Tastatur Mittel (20A, 20B, 38, 40) für jede Taste innerhalb des Satzes verbindender Tasten des ersten Bereichs (1) umfasst, um den größten Anteil des Volumer s jeder solchen Taste innerhalb des Raumes für den Satz verbindender Tasten des zweiten Bereichs (2) aufzunehmen.

18. Tastatur nach Anspruch 17, **dadurch gekennzeichnet, dass** sie Mittel (20A, 20B, 38, 40) für jede Taste innerhalb des Satzes verbindender Tasten des zweiten Bereichs (2) umfasst, um den größten Anteil des Volumens jeder solchen Taste innerhalb des Raumes für den Satz verbindender Tasten des ersten Bereichs (1) aufzunehmen.

19. Tastatur nach Anspruch 17, **dadurch gekennzeichnet, dass** sie Mittel (20A, 20B, 38, 40) für eine Mehrzahl der besagten Vielzahl von Tasten des ersten Bereichs (1) umfasst, um den größten Anteil des Volumens jeder solchen Taste innerhalb des Raumes für den Satz verbindender Tasten des zweiten Bereichs (2) aufzunehmen.

20. Tastatur nach Anspruch 19, **dadurch gekennzeichnet**, sie Mittel (20A, 20B, 38, 40) für eine Mehrzahl der besagten Vielzahl von Tasten des zweiten Bereichs (2) umfasst, um den größten Anteil des Volumens jeder solchen Taste innerhalb des Raumes für den Satz verbindender Tasten des ersten Bereichs (1) aufzunehmen.

21. Tastatur nach Anspruch 1, **dadurch gekennzeichnet, dass** sie eine erste Anordnung von Tasten umfasst, die selektiv in einem ersten elektronischen Schaltkreis benutzt werden können, wobei die Tastatur in eine Vielzahl von Tastaturbereichen (1, 2) auseinar dernehmbar gestaltet ist und jeder Tastaturbereich (1, 2) einen Bereich der Anordnung von Tasten sowie einen Bereich des elektronischen Schaltkreises umfasst, wobei die Bereiche elektronisch mit angefügten Tastaturbereichen (1, 2) verbunden werden können, um selektive Operationen in dem ersten elektronischen Schaltkreis vorzunehmen und die Tastatur Mittel (20A, 20B, 38, 40) umfasst, um mindestens 50 % des Raumes des Bereichs für die Tasten eines abnehmbaren Bereiches (1) in dem Bereich für die Tasten des anderen abnehmbaren Bereiches (2) aufzunehmen.

22. Computer, enthaltend eine Tastatur nach einem der vorstehenden Ansprüche.

## Revendications

1. Clavier, pour entrer des données, englobant au mcins deux sections de clavier (1, 2), une première section (1) et une deuxième section (2), chaque section de ce type (1, 2) comprenant :
a. une structure de section de clavier, et
b. plusieurs touches, comprenant au moins un jeu de touches de limitation (= BOUNDING KEY SET) (132), ledit BOUNDING KEY SET étant constitué de deux rangs contigus de deux touches respectivement d'une section, chaque touche faisant partie desdites plusieurs touches englobant
i. un dessus de touche (20) qui est utilisé pour activer ladite touche, et
ii. des moyens de commutation (22, 24, 26) associés à ladite touche,
c. un espace de touche de section (= SECTION KEY SPACE) (110, 112, 122, 118, 120), et
d. un espace de touche de section exempte de pavé de touche (= SECTION CAPLESS KEY SPACE),
dans lequel lesdites sections de clavier (1, 2) peuvent être arrangées dans au moins deux positions,
la première étant une position de clavier opérationnel dans laquelle lesdites sections (1, 2) peuvent être arrangées de telle sorte que les touches cesdites sections (1, 2) peuvent être sollicitées pour entrer des données, l'autre étant une position de stockage de clavier,
**caractérisé en ce qu'**il englobe en outre des moyens 20A, 20B, 38, 40) pour chaque touche à l'intérieur dudit BOUNDING KEY SET (132) de ladite première section 1) pour placer le dessus de touche (20) de ladite touche à l'intérieur dudit SECTION KEY SPACE (110, 112, 122, 128, 120) de ladite deuxième section (2) .

2. Clavier du type indiqué à la revendication 1, **caractérisé en ce qu'**il englobe des moyens (20A, 20B, 38, 40) pour chaque touche à l'intérieur dudit BOUNDING KEY SET (132) de ladite deuxième section (2) pour placer le dessus de touche (20) de ladite touche à l'intérieur dudit SECTION KEY SPACE de ladite première section (1).

3. Clavier du type indiqué à la revendication 1, **caractérisé en ce qu'**il englobe des moyens (20A, 20B, 33, 40) pour une majorité desdites plusieurs touches de ladite première section (1) pour placer les dessus de touche (20) desdites touches à l'intérieur dudit SECTION KEY SPACE de ladite deuxième section (2).

4. Clavier du type indiqué à la revendication 1, **caractérisé en ce qu'**il englobe des moyens (20A, 20B, 38, 40) pour une majorité desdites plusieurs touches de ladite deuxième section (2) pour placer les dessus de touche (20) desdites touches à l'intérieur dudit SECTION KEY SPACE de ladite première section (1).

5. Clavier du type indiqué à la revendication 1, **caractérisé en ce qu'**il englobe des moyens (20A, 20B, 38, 40) pour chaque touche à l'intérieur dudit BOUNDING KEY SET de ladite première section (1) pour placer le dessus de touche (20) de ladite touche à l'intérieur dudit SECTION CAPLESS KEY SPACE de ladite deuxième section (2) .

6. Clavier du type indiqué à la revendication 5, **caractérisé en ce qu'**il englobe des moyens (20A, 20B, 38, 40) pour chaque touche à l'intérieur dudit BOUNDING KEY SET de ladite deuxième section (2) pour placer le dessus de touche (20) de ladite touche à l'intérieur dudit SECTION CAPLESS KEY SPACE de ladite première section (1).

7. Clavier du type indiqué à la revendication 5, **caractérisé en ce qu'**il englobe des moyens (20A, 20B, 38, 40) pour une majorité desdites plusieurs touches de ladite première section (1) pour placer les dessus de touche (20) desdites touches à l'intérieur dudit SECTION CAPLESS KEY SPACE de ladite deuxième section (2).

8. Clavier du type indiqué à la revendication 5, **caractérisé en ce qu'**il englobe des moyens (20A, 20B, 38, 40) pour une majorité desdites plusieurs touches de ladite deuxième section (2) pour placer les dessus de touche (20) desdites touches à l'intérieur dudit SECTION CAPLESS KEY SPACE de ladite première section (1).

9. Clavier du type indiqué à la revendication 1, **caractérisé en ce que** chacune desdites sections (1, 2) englobe :
e. au moins un espace de jeu de touches de limitation (= BOUNDING KEY SET SPACE), et
f. au moins un espace exempt de dessus de touche de jeu de touches de limitation (= BOUNDING KEY SET CAPLESS SPACE),
dans lequel le clavier englobe en outre des moyens (20A, 20B, 38, 40) pour chaque touche à l'intérieur dudit BOUNDING KEY SET (132) de ladite première section (1) pour placer le dessus de touche (20) de ladite touche à l'intérieur d'un BOUNDING KEY SET SPACE de ladite deuxième section (2).

10. Clavier du type indiqué à la revendication 9, **caractérisé en ce qu'**il englobe des moyens (20A, 20B, 38, 40) pour chaque touche à l'intérieur dudit BOUNDING KEY SET (132) de ladite deuxième section (2) pour placer le dessus de touche (20) de ladite touche à l'intérieur d'un BOUNDING KEY SET SPACE de ladite première section (1).

11. Clavier du type indiqué à la revendication 9, **caractérisé en ce qu'**il englobe des moyens (20A, 20B, 38, 40) pour une majorité desdites plusieurs touches pour ladite première section (1) pour placer les dessus de touche (20) desdites touches à l'intérieur d'un BOUNDING KEY SET SPACE de ladite deuxième section (2).

12. Clavier du type indiqué à la revendication 11, **caractérisé en ce qu'**il englobe des moyens (20A, 20B, 38, 40) pour une majorité desdites plusieurs touches pour ladite deuxième section (2) pour placer les dessus de touche (20) desdites touches à l'intérieur d'un BOUNDING KEY SET SPACE de ladite première section (1).

13. Clavier du type indiqué à la revendication 9, **caractérisé en ce qu'**il englobe des moyens (20A, 20B, 38, 40) pour chaque touche à l'intérieur dudit BOUNDING KEY SET de ladite première section (1) pour placer le dessus de touche (20) de ladite touche à l'intérieur d'un BOUNDING KEY SET CAPLESS SPACE de ladite deuxième section (2).

14. Clavier du type indiqué à la revendication 13, **caractérisé en ce qu'**il englobe des moyens (20A, 20B, 38, 40) pour chaque touche à l'intérieur dudit BOUNDING KEY SET de ladite deuxième section (2) pour placer le dessus de touche (20) de ladite touche à l'intérieur d'un BOUNDING KEY SET CAPLESS SPACE de ladite première section (1).

15. Clavier du type indiqué à la revendication 13, **caractérisé en ce qu'**il englobe des moyens (20A, 20B, 38, 40) pour une majorité desdites plusieurs touches de ladite première section (1) pour placer les dessus de touche (20) desdites touches à l'intérieur d'un BOUNDING KEY SET CAPLESS SPACE de ladite deuxième section (2).

16. Clavier du type indiqué à la revendication 15, **caractérisé en ce qu'**il englobe des moyens (20A, 20B, 38, 40) pour une majorité desdites plusieurs touches de ladite deuxième section (2) pour placer les dessus de touche (20) desdites touches à l'intérieur d'un BOUNDING KEY SET CAPLESS SPACE de ladite première section (1).

17. Clavier du type indiqué à la revendication 1, **caractérisé en ce que** chacune desdites première section (1) et deuxième section (2) englobe :
e. au moins un espace de jeu de touches de limitation (= BOUNDING KEY SET SPACE),
dans lequel le clavier englobe des moyens (20A, 20B, 38, 40) pour chaque touche à l'intérieur dudit BOUNDING KEY SET de ladite première section (1) pour placer une majorité du volume de chaque touche de ce type à l'intérieur d'un BOUNDING KEY SET SPACE de ladite deuxième section (2).

18. Clavier du type indiqué à la revendication 17, **caractérisé en ce qu'**il englobe des moyens (20A, 20B, 38, 40) pour chaque touche à l'intérieur dudit BOUNDING KEY SET de ladite deuxième section (2) pour placer une majorité du volume de chaque touche de ce type à l'intérieur d'un BOUNDING KEY SET SPACE de ladite première section (1).

19. Clavier du type indiqué à la revendication 17, **caractérisé en ce qu'**il englobe des moyens (20A, 20B, 38, 40) pour une majorité de touches de ladite première section (1) pour placer une majorité du volume de chaque touche de ce type à l'intérieur d'un BOUNDING KEY SET SPACE de ladite deuxième section (2).

20. Clavier du type indiqué à la revendication 17, **caractérisé en ce qu'**il englobe des moyens (20A, 20B, 38, 40) pour une majorité de touches de ladite deuxième section (2) pour placer une majorité du volume de chaque touche de ce type à l'intérieur d'un BOUNDING KEY SET SPACE de ladite première section (1).

21. Clavier du type indiqué à la revendication 1, **caractérisé en ce qu'**il englobe un premier réseau de touches qui peuvent être actionnées de manière sélective sur un premier circuit électronique, ledit clavier pouvant être séparé physiquement en plusieurs portions ce claviers (1, 2), chaque portion de clavier de ce type (1, 2) portant une section dudit réseau de touches et chacune desdites portions de claviers (1, 2) portant une section dudit circuit électronique, chacune desdites portions de clavier (1, 2) étant conçue à des fins d'interconnexion électronique avec des portions de clavier adjacentes (1, 2) pour des opérations sélectives sur ledit premier circuit électronique, et des moyens (20A, 20B, 38, 40) pour placer au moins 50 % de l'espace occupé par le SECTION KEY SPACE d'une portion détachable (1) dudit clavier à l'intérieur de la SECTION KEY SPACE de l'autre portion détachable (2) dudit clavier.

22. Ordinateur comprenant un clavier tel qu'indiqué dans l'une quelconque des revendications précédentes.
